# FASCICULE DE BREVET EUROPEEN

(11) **EP 3 276 435 B1**
(45) Date de publication et mention de la délivrance du brevet: **03.11.2021**
(21) Numéro de dépôt: 16181952.9
(22) Date de dépôt: 29.07.2016
(51) Int. Cl.: G04G 21/00

(54) **DISPOSITIF DE COMMUNICATION OPTIQUE D'UN OBJET PORTABLE**
OPTISCHE KOMMUNIKATIONSVORRICHTUNG EINES TRAGBAREN GEGENSTANDS
OPTICAL COMMUNICATION DEVICE OF A PORTABLE OBJECT

(43) Date de publication de la demande: 31.01.2018
(73) Titulaire: ETA SA Manufacture Horlogère Suisse, 2540 Grenchen (CH)
(72) Inventeur: LAGORGETTE, Pascal, 2502 Bienne (CH)
(74) Mandataire: Collé, Emmanuel

(56) Documents cités:
- WO-A1-01/06330
- GB-A- 2 486 300
- US-A- 3 987 616

## Description

La présente invention concerne une pièce d'horlogerie selon la revendication 1.

### ART ANTERIEUR

On distingue actuellement deux types de montres, les montres mécaniques ne comprenant aucun électronique et les montres dites électroniques fonctionnant avec une pile et un microcontrôleur. Or, les montres électroniques ont énormément évolué pour devenir de plus en plus des montres dites connectées. Ces montres connectées sont munies d'un module de communication utilisant un protocole NFC et/ou Bluetooth permettant l'échange de données avec un autre appareil du type téléphone mobile (aussi appelé smartphone) ou ordinateur portable ou tablette électronique. Cet échange de données permet actuellement le transfert de données d'un capteur situé dans la montre vers le téléphone mobile ou la tablette électronique, ces appareils possédant une puissance de calcul bien supérieure. Cet échange de données permet également l'envoi de données du type notification ou messagerie du téléphone vers la montre de sorte à prévenir l'utilisateur.

Ces montres électroniques peuvent utiliser, pour l'affichage des informations de temps comme l'heure ou la date, des moyens analogiques comme des aiguilles ou des disques ou des écrans électroniques utilisant les technologies LCD, LED ou OLED. Or, l'utilisation d'aiguilles ou de disques nécessitent l'utilisation d'au moins un moteur et de rouages de sorte que le réglage de l'heure se fait manuellement pouvant entraîner des imprécisions et des décalages.

Un autre moyen de communiquer est l'utilisation de la technologie optique utilisant un phototransistor pour réceptionner un signal lumineux codé. Toutefois, cette technologie présente l'inconvénient de nécessiter des ouvertures dans le cadran pour le passage de la lumière et est soumise aux risques liées à l'environnement lumineux extérieur. US 3 987 616 A concerne une pièce d'horlogerie comprenant un boitier dans lequel un module électronique fournissant au moins une information est agencé, ladite au moins une information étant affichée par des moyens d'affichage sur un cadran, le module électronique comprend en outre une unité de communication comportant un dispositif de réception optique, ledit dispositif de réception optique comprenant au moins un récepteur photo-électrique agencé en regard d'une première ouverture afin qu'un signal optique puisse être capté par ledit récepteur optique. GB 2 486 300 A concerne une pièce d'horlogerie comprenant au moins un récepteur photo-électrique pour surveiller optiquement une unité d'affichage visuel pour recevoir un signal de données comprenant une séquence de bits de données. Ladite pièce d'horlogerie comprend un couvercle de récepteur photo-électrique configuré pour se déplacer entre un premier état de couvercle, dans lequel les récepteurs photo-électriques sont optiquement bloqués, et un deuxième état de couvercle. Les moyens de traitement de la pièce d'horlogerie sont activés lorsque le couvercle du récepteur photo-électrique est déplacé vers le deuxième état du couvercle. WO 01/06330 A1 concerne une pièce d'horlogerie comprenant un boîtier dans lequel un module électronique fournissant au moins une information est agencé, ladite au moins une information étant affichée par des moyens d'affichage sur un cadran, le module électronique comprenant en outre une unité de communication comportant un dispositif de réception optique, ledit dispositif de réception optique comprenant au moins un récepteur photo-électrique agencé en regard d'une première ouverture réalisée sur le cadran afin qu'un signal optique puisse être capté par ledit récepteur optique.

### RESUME DE L'INVENTION

La présente invention a pour but de pallier aux inconvénients de l'art antérieur en proposant un dispositif permettant une communication optique simple, efficace et la plus invisible possible.

A cet effet, l'invention concerne une pièce d'horlogerie selon la revendication 1.

Un avantage de cette invention est qu'elle permet une communication optique entre un objet portable comme une montre et un autre appareil sans dénaturer le design d'origine. Cela permet alors d'implanter un tel dispositif de communication dans des montres existantes.

Dans un premier mode de réalisation avantageux, ledit dispositif de réception optique comprenant deux récepteurs photo-électrique, chaque récepteur photo-électrique étant en regard d'une première ouverture réalisée sur le cadran, ledit dispositif de réception optique comprenant en outre un dispositif d'occultation intercalé entre le cadran et chaque récepteur photo-électrique.

Dans un second mode de réalisation avantageux, le dispositif d'occultation comprend un volet se présentant sous la forme d'un segment circulaire monté sur un axe à son extrémité pointue, ledit axe étant entrainé par un moteur afin que le volet puisse être mis en rotation.

Dans un troisième mode de réalisation avantageux, les moyens d'affichage comprennent au moins un disque monté en rotation et mis en rotation par au moins un moteur, ledit disque portant des informations à afficher au travers d'un guichet réalisé sur le cadran, le disque et le guichet faisant, respectivement, office de dispositif d'occultation et de première ouverture, et en ce que ledit disque comporte en outre une seconde ouverture agencée pour être apte à se trouver en regard de la première ouverture et du récepteur photo-électrique pour laisser passer un signal optique.

Dans un quatrième mode de réalisation avantageux, le disque des moyens d'affichage comprend une pluralité de positions dans chacune desquelles une information est disposée, la seconde ouverture étant une fente située entre deux positions.

Dans un cinquième mode de réalisation avantageux, le disque des moyens d'affichage comprend une pluralité de positions dans chacune desquelles une information est disposée, ledit disque comprenant une position supplémentaire dans laquelle une seconde ouverture est réalisée.

Dans un sixième mode de réalisation avantageux, le disque des moyens d'affichage comprend une pluralité de positions dans chacune desquelles un marquage est disposé, la seconde ouverture étant une fente au moins partiellement confondue avec un marquage.

### BREVE DESCRIPTION DES FIGURES

Les buts, avantages et caractéristiques de l'invention apparaîtront plus clairement dans la description détaillée suivante d'au moins une forme de réalisation de l'invention donnée uniquement à titre d'exemple non limitatif et illustrée par les dessins annexés sur lesquels :
- Les figures 1 et 2 représentent schématiquement l'objet portable selon l'invention;
- Les figures 3 et 4 représentent schématiquement un premier mode de réalisation l'objet portable selon l'invention;
- La figure 5 représente schématiquement un premier mode d'exécution du premier mode de réalisation l'objet portable selon l'invention;
- Les figures 6 à 11 représentent schématiquement un second mode d'exécution du premier mode de réalisation l'objet portable selon l'invention ;
- Les figures 12a et 12b représentent schématiquement une variante du premier mode de réalisation l'objet portable selon l'invention;
- La figure 13 représente schématiquement un second mode de réalisation l'objet portable selon l'invention.

### DESCRIPTION DETAILLEE

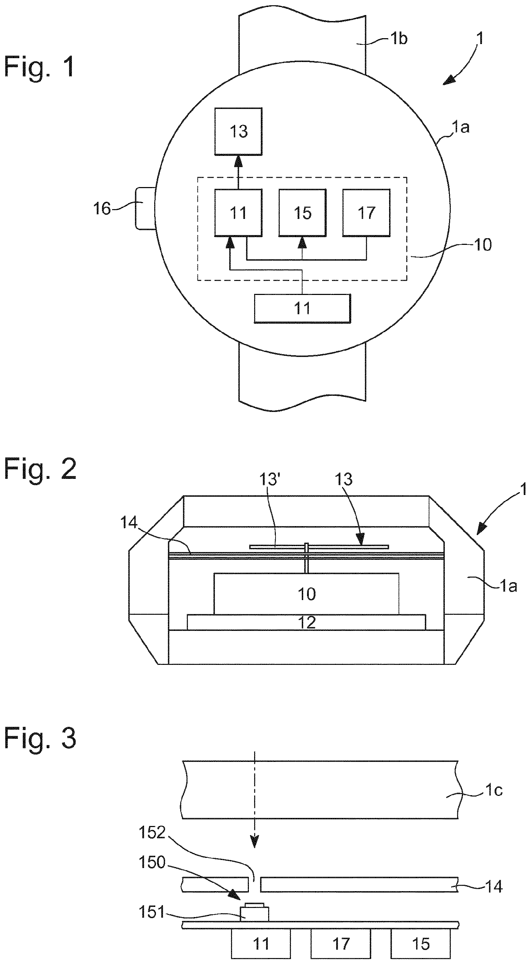

Sur les figures 1 et 2, une montre ou pièce d'horlogerie 1 selon l'invention est représentée. La montre 1 comprend donc un boîtier 1a muni d'un bracelet 1b. Dans ce boîtier, un module électronique 10 qui comprend un microcontrôleur 11 alimenté en électricité par une unité d'alimentation 12 comme une pile ou une batterie est agencé, ledit microcontrôleur 11 comprenant une base de temps et des zones mémoires. Ce microcontrôleur 11 est utilisé afin d'envoyer des signaux de commande vers des moyens d'affichage 13, ces moyens d'affichage 13 pouvant comprendre des aiguilles 13' ou des disques coopérant avec des marquages d'un cadran 14. Ces moyens d'affichage 13 permettent l'affichage d'une information temporelle comme l'heure mais peuvent aussi afficher la date, le quantième ou la phase de la lune. Le microcontrôleur 11 est connecté également avec des moyens de commande 16 pouvant être une couronne, des poussoirs ou des moyens tactiles. Le module électronique 10 peut également comprendre une unité de communication 15 pour la réception de données voir au moins un capteur 17.

Selon l'invention, l'unité de communication 15 est configurée pour permettre une communication optique. Pour cela, l'unité de communication 15 comprend un dispositif de réception optique 150 permettant la réception d'un signal lumineux.

Ce dispositif de réception optique 150 est avantageusement placé au niveau du cadran 14. Ce dispositif de réception optique 150 comprend un au moins un récepteur photo-électrique 151. Ce récepteur photo-électrique 151 est généralement un phototransistor ou photodiode c'est à dire un composant semiconducteur ayant la capacité de détecter un rayonnement du domaine optique et de le transformer en signal électrique. Dans le cas d'un phototransistor, il s'agit d'un transistor bipolaire dont la base est sensible au rayonnement lumineux. Lorsque la base est éclairée le phototransistor est équivalent à un interrupteur fermé entre l'émetteur et le collecteur et lorsque la base n'est pas éclairée, c'est équivalent à un interrupteur ouvert.

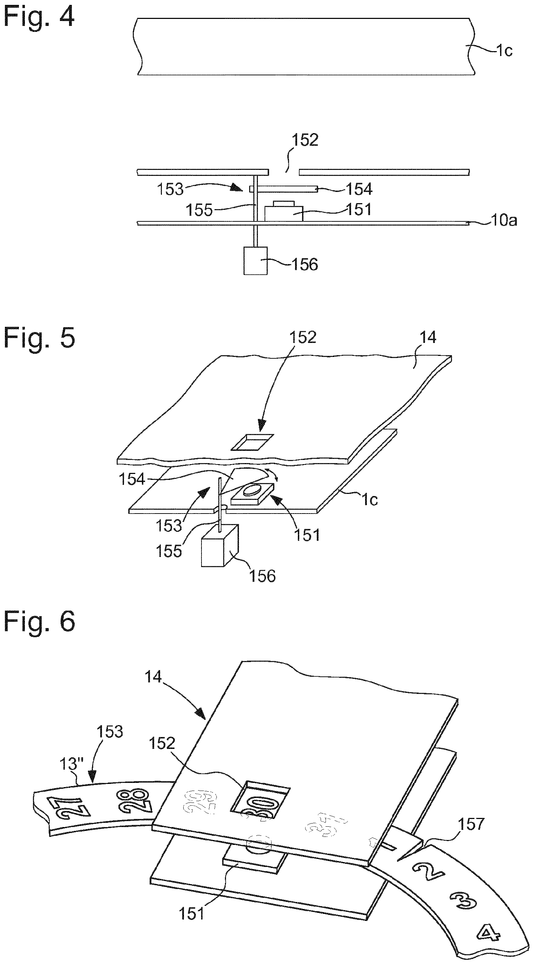

Selon un premier mode de réalisation visible aux figures 3 et 4, le récepteur photo-électrique 151 est placé sous le cadran 14, celui-ci comportant une ouverture appelée première ouverture 152. Cette première ouverture 152 permet à la lumière de passer à travers le cadran 14 pour être captée par ledit récepteur photo-électrique 151. Toutefois, il devient nécessaire de camoufler le plus possible cette première ouverture 152 afin de ne pas dénaturer l'esthétisme du cadran 14.

Selon un premier mode d'exécution visible à la figure 5, le dispositif de réception optique 150 comprend en outre un dispositif d'occultation 153. Ce dispositif d'occultation consiste en un volet 154 monté mobile en rotation ou en translation. Ce volet 154 permet avantageusement de cacher le phototransistor 151 lorsque celui-ci n'est pas utilisé. Par exemple, le volet 154 aura une forme de segment circulaire fixé à un axe 155 au niveau de sa pointe afin d'être mise en rotation par un moteur 156 à la demande.

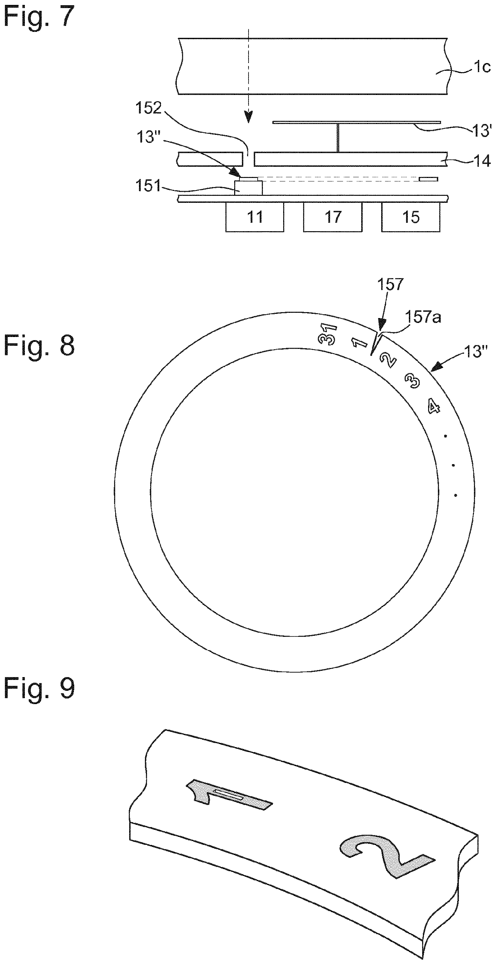

Selon un second mode d'exécution visible aux figure 6 et 7, le dispositif d'occultation 153 fait partie des moyens d'affichage 13. En effet, ces moyens d'affichage 13 peuvent comprendre un disque 13", par exemple le disque de quantième, pour afficher une information via un guichet dans le cadran faisant office de première ouverture 152. Ce disque 13" est entrainé par un moteur et comprend des informations quel que des informations de quantième (jour, mois) ou de phase de lune. Astucieusement, ce disque 13" comprend une ouverture appelée seconde ouverture 157. Cette seconde ouverture 157 permet au signal lumineux de passer au travers du cadran 14. Pour cela, la montre est apte à fonctionner dans un mode de fonctionnement dans lequel des données peuvent être reçues. Ce mode peut être activé automatiquement ou via des moyens de commande. Lorsque ce mode de fonctionnement est activé, le disque est mis en rotation de sorte que la seconde ouverture du disque se trouve en regard de la première ouverture du cadran. De cette façon, le signal lumineux peut être reçu par le récepteur photo-électrique.

Dans une première forme de réalisation de ce second mode d'exécution visible à la figure 8, la seconde ouverture 157 du disque 13" pourra être une fente 157a. Dans le cas d'un disque de quantième c'est-à-dire munie de marquage régulièrement répartis, cette fente 157a est placée entre 2 positions (2 dates). Cette fente 157a est située dans une zone non visible quand on affiche l'une ou l'autre date. Pour établir la communication, le disque 13" est piloté de sorte à présenter cette fente 157a au-dessus du récepteur photo-électrique 151 : c'est-à-dire qu'on se place entre 2 passages de date. Ainsi, la fente 157a est alignée avec le guichet c'est-à-dire la première ouverture 152 et le récepteur photo-électrique 151. La communication optique peut être réalisée. Dans une réalisation particulière, la fente 157a sera confondu dans un des marquages afin d'être la plus invisible possible comme visible à la figure 9.

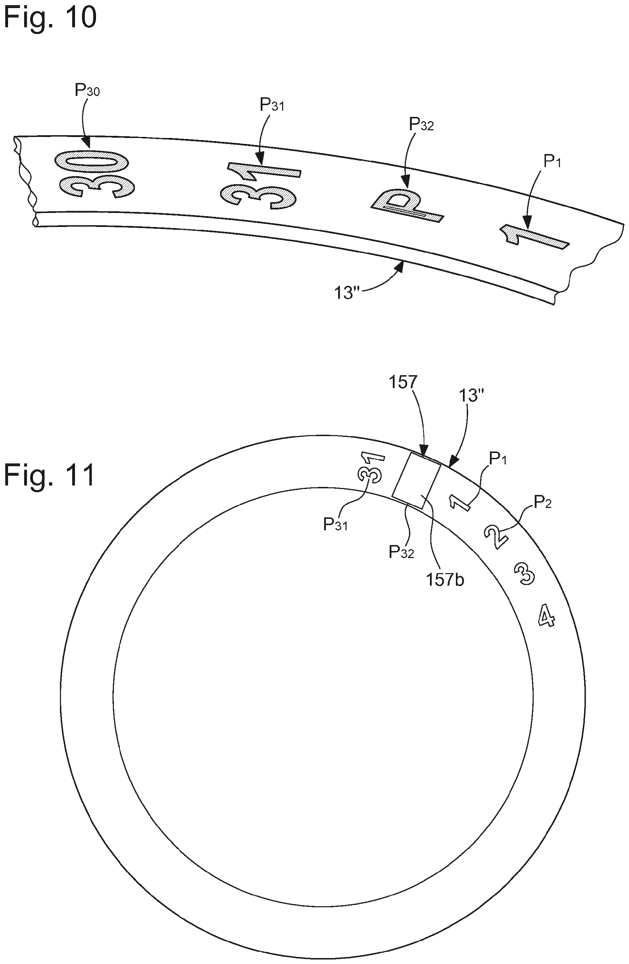

Dans une seconde forme de réalisation de ce second mode d'exécution, la seconde ouverture 157 consiste à étamper une position Pi supplémentaire comme visible aux figures 10 et 11. En effet, pour un disque 13" de quantième, il est prévu d'avoir trente-et-une positionPi appelée P1 à P31, une par jour d'un mois. Le but ici est de prévoir une 32ème position P32 pour la seconde ouverture. Cette seconde ouverture 157 se présente alors sous la forme d'une inscription découpée 157b. La découpe de l'inscription permet de laisser passer la lumière jusqu'au récepteur photo-électrique 151. L'étampage de l'inscription apparaît sombre/ noire comme le reste des indications décalquées sur le disque.

Dans une variante de cette seconde forme de réalisation, la 32^{ème} position sera simplement une percée faite à même le disque. Cette percée permet ainsi le passage de la lumière.

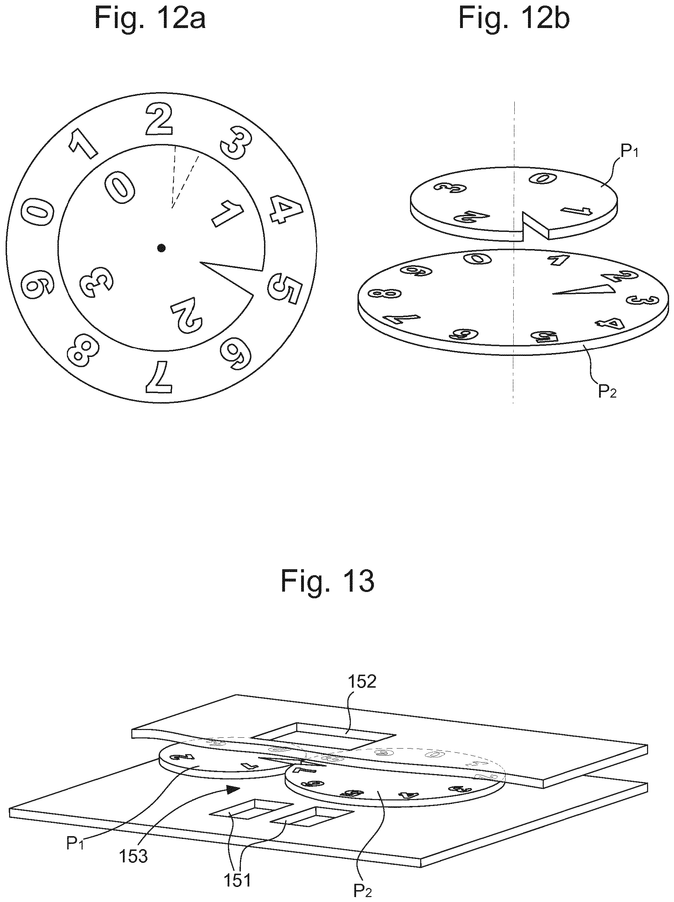

Bien entendu, il est envisageable que dans le cas où l'affiche du quantième utilise deux disques 13" appelé D1 et D2 se superposant partiellement pour afficher le quantième, chacun des disques 13" est muni de cette seconde ouverture 157 comme une fente ou ouverture ou percée. Les disques sont alors mis en rotation pour que les ouvertures/fentes/percées qu'ils comprennent se trouvent en regards les unes des autres comme visibles aux figures 12a et 12b.

Dans un second mode de réalisation, le dispositif de réception optique comprend deux récepteurs photo-électrique 151 comme visible à la figure 13. Cette présence de deux récepteurs photo-électrique 151 permet de recevoir l'information en double et donc de comparer les messages reçus. Ainsi, il est possible de détecter une erreur. Par conséquent, le cadran présente deux premières ouvertures: une pour chaque récepteur photo-électrique 151. Chaque première ouverture du cadran est associée à une seconde ouverture agencé sur un dispositif d'occultation qui peut être un disque d'affichage d'informations (quantième, jour, phase de lune) ou un volet mobile.

Pour ce second mode de réalisation, il est possible que la présence des deux récepteurs photo-électrique 151 serve à permettre l'utilisation d'une transmission de données synchrone. En effet, une telle transmission de données utilise un signal d'horloger en parallèle pour cadencer l'envoi des données. Cela nécessite donc d'avoir deux récepteurs distincts pour envoyer deux signaux distincts.

Selon la présente invention, le dispositif d'occultation est mis en mouvement suite à la réception d'une commande. Cette commande peut être activée via les moyens de commande de la pièce d'horlogerie. Celle-ci peut comprendre des poussoirs ou touches tactiles permettant d'agir sur le module électronique pour activer des fonctions dont une fonction communication.

Cette activation de la réception de données optiques peut être faite via un signal radio. En effet, l'unité de communication peut comprendre en outre une interface du type Bluetooth ou NFC. Dans ce cas, un signal radio, envoyé par un appareil du type smartphone ou une balise, est reçu par la pièce d'horlogerie qui va alors activer la réception optique.

Par ailleurs, la pièce d'horlogerie pourra être compatible avec la technologie LiFi. Cette technologie consiste en une technologie de communication sans fil basée sur l'utilisation de la lumière visible comprise entre la radiation (480 nm de longueur d'onde, soit 670 THz) (perçue bleue) et la radiation (650 nm, soit 460 THz) (perçue rouge). Alors que le Wi-Fi utilise une partie radio du spectre électromagnétique hors du spectre visible, le Li-Fi utilise la partie visible (optique) du spectre électromagnétique. Le principe du Li-Fi repose sur le codage et l'envoi de données via la modulation d'amplitude des sources de lumière (scintillation imperceptible à l'œil), selon un protocole bien défini et standardisé.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

En effet, il pourra être prévu une variante des différents modes de réalisation dans laquelle l'unité de communication 15 comprend, outre un dispositif de réception optique 150, un dispositif d'émission optique permettant l'émission d'un signal lumineux. Un tel dispositif consiste généralement en une photodiode capable de générer un signal lumineux suite à une excitation électrique.

## Revendications

1. Pièce d'horlogerie (1) comprenant un boitier (1a) dans lequel un module électronique (10) fournissant au moins une information est agencé, ladite au moins une information étant affichée par des moyens d'affichage sur un cadran (14), **caractérisé en ce que** le module électronique comprend en outre une unité de communication (15) comportant un dispositif de réception optique (150), ledit dispositif de réception optique comprenant au moins un récepteur photo-électrique (151) agencé en regard d'une première ouverture (152) réalisée sur le cadran afin qu'un signal optique puisse être capté par ledit récepteur optique, ledit dispositif de réception optique comprenant en outre un dispositif d'occultation (153) intercalé entre le cadran et le récepteur photo-électrique et monté mobile de sorte à pouvoir se bloquer ou laisser passer le signal optique extérieur.

2. Pièce d'horlogerie selon la revendication 1, **caractérisé en ce que** ledit dispositif de réception optique (150) comprenant deux récepteurs photo-électrique (151), chaque récepteur photo-électrique étant en regard d'une première ouverture (152) réalisée sur le cadran, ledit dispositif de réception optique comprenant en outre un dispositif d'occultation intercalé entre le cadran et chaque récepteur photo-électrique.

3. Pièce d'horlogerie selon les revendications 1 ou 2, **caractérisé en ce que** le dispositif d'occultation (153) comprend un volet (154) se présentant sous la forme d'un segment circulaire monté sur un axe (155) à son extrémité pointue, ledit axe étant entrainé par un moteur (156) afin que le volet puisse être mis en rotation.

4. Pièce d'horlogerie selon les revendications 1 ou 2, **caractérisé en ce que** les moyens d'affichage (13) comprennent au moins un disque (13") monté en rotation et mis en rotation par au moins un moteur, ledit disque portant des informations à afficher au travers d'un guichet réalisé sur le cadran (14), le disque et le guichet faisant, respectivement, office de dispositif d'occultation et de première ouverture (152), et **en ce que** ledit disque comporte en outre une seconde ouverture (157) agencée pour être apte à se trouver en regard de la première ouverture et du récepteur photo-électrique pour laisser passer un signal optique.

5. Pièce d'horlogerie selon la revendication 4, **caractérisé en ce que** le disque des moyens d'affichage comprend une pluralité de positions (Pi) dans chacune desquelles une information est disposée, la seconde ouverture (157) étant une fente située entre deux positions.

6. Pièce d'horlogerie selon la revendication 4, **caractérisé en ce que** le disque des moyens d'affichage comprend une pluralité de positions (Pi) dans chacune desquelles une information est disposée, ledit disque comprenant une position supplémentaire (P32) dans laquelle une seconde ouverture (157) est réalisée.

7. Pièce d'horlogerie selon la revendication 4, **caractérisé en ce que** le disque des moyens d'affichage comprend une pluralité de positions (Pi) dans chacune desquelles un marquage est disposé, la seconde ouverture étant une fente au moins partiellement confondue avec un marquage.

## Patentansprüche

1. Uhr (1), umfassend ein Gehäuse (1a), in dem ein elektronisches Modul (10), das mindestens eine Information bereitstellt, eingerichtet ist, wobei die mindestens eine Information von Anzeigemitteln auf einem Zifferblatt (14) angezeigt wird, wobei das elektronische Modul ferner eine Kommunikationseinheit (15) umfasst, die eine optische Empfangseinheit (150) aufweist, wobei die optische Empfangseinheit mindestens einen photoelektrischen Rezeptor (151) umfasst, der einer ersten Öffnung (152) zugewandt ausgebildet ist, die auf dem Zifferblatt eingerichtet ist, damit ein optisches Signal von dem optischen Rezeptor erfasst werden kann, **dadurch gekennzeichnet, dass** die optische Empfangseinheit ferner eine Abdeckungsvorrichtung (153) umfasst, die zwischen dem Zifferblatt und dem photoelektrischen Rezeptor angeordnet ist und derart beweglich angebracht ist, dass sie sich arretieren oder das äußere optische Signal hindurchlassen kann.

2. Uhr nach Anspruch 1, **dadurch gekennzeichnet, dass** die optische Empfangseinheit (150) zwei photoelektrische Rezeptoren (151) umfasst, wobei jeder photoelektrische Rezeptor einer ersten Öffnung (152) zugewandt ist, die auf dem Zifferblatt eingerichtet ist, wobei die optische Empfangseinheit ferner eine Abdeckungsvorrichtung umfasst, die zwischen dem Zifferblatt und jedem photoelektrischen Rezeptor angeordnet ist.

3. Uhr nach den Ansprüchen 1 oder 2, **dadurch gekennzeichnet, dass** die Abdeckungsvorrichtung (153) eine Klappe (154) umfasst, die in Form eines runden Segments vorliegt, die auf einer Welle (155) an deren spitzen Ende angebracht ist, wobei die Welle von einem Motor (156) angetrieben wird, damit die Klappe in Rotation versetzbar ist.

4. Uhr nach den Ansprüchen 1 oder 2, **dadurch gekennzeichnet, dass** die Anzeigemittel (13) mindestens eine Scheibe (13") umfassen, die rotatorisch angebracht ist und von mindestens einem Motor in Rotation versetzt wird, wobei die Scheibe Informationen trägt, die durch ein auf dem Zifferblatt (14) eingerichteten Fenster anzuzeigen sind, wobei die Scheibe und das Fenster jeweils als Abdeckungsvorrichtung und erste Öffnung (152) dienen, und dass jede Scheibe ferner eine zweite Öffnung (157) aufweist, die ausgebildet ist, um imstande zu sein, sich der ersten Öffnung und dem photoelektrischen Rezeptor zugewandt zu befinden, um ein optisches Signal hindurchzulassen.

5. Uhr nach Anspruch 4, **dadurch gekennzeichnet, dass** die Scheibe der Anzeigemittel eine Vielzahl von Positionen (Pi) umfasst, in denen in jeder von ihnen eine Information angeordnet ist, wobei die zweite Öffnung (157) ein Schlitz ist, der sich zwischen zwei Positionen befindet.

6. Uhr nach Anspruch 4, **dadurch gekennzeichnet, dass** die Scheibe der Anzeigemittel eine Vielzahl von Positionen (Pi) umfasst, in denen in jeder von ihnen eine Information angeordnet ist, wobei die Scheibe eine zusätzliche Position (P32) umfasst, in der eine zweite Öffnung (157) eingerichtet ist.

7. Uhr nach Anspruch 4, **dadurch gekennzeichnet, dass** die Scheibe der Anzeigemittel eine Vielzahl von Positionen (Pi) umfasst, in denen in jeder von ihnen eine Markierung angeordnet ist, wobei die zweite Öffnung ein Schlitz ist, der mindestens teilweise mit einer Markierung zusammenfällt.

## Claims

1. Timepiece (1) comprising a case (1a), in which an electronic module (10) supplying at least one item of information is arranged, wherein said at least one item of information is displayed on a dial (14) by display means, the electronic module additionally comprising a communication unit (15) having an optical receiving device (150), wherein said optical receiving device comprises at least one photoelectric receiver (151) arranged to face a first aperture (152) formed on the dial so that an optical signal can be received by said optical receiver, **characterized in** taht said optical receiving device additionally comprises an occultation device (153) interposed between the dial and the photoelectric receiver and movably mounted to be able to obstruct or let through the external optical signal.

2. Timepiece according to claim 1, **characterised in that** said optical receiving device (150) comprises two photoelectric receivers (151), each photoelectric receiver facing a first aperture (152) formed on the dial, and said optical receiving device additionally comprises an occultation device interposed between the dial and each photoelectric receiver.

3. Timepiece according to claim 1 or 2, **characterised in that** the occultation device (153) comprises a shutter (154) configured in the form of a circular segment mounted on a shaft (155) at its pointed end, wherein said shaft is driven by a motor (156) so that the shutter can be set in rotation.

4. Timepiece according to claim 1 or 2, **characterised in that** the display means (13) comprise at least one disc (13"), which is rotatably mounted and set in rotation by at least one motor, wherein said disc carries information to be displayed through a window formed on the dial (14), the disc and the window serving as occultation device and first aperture (152) respectively, and **in that** said disc additionally has a second aperture (157) arranged to able it to be located to face the first aperture and the photoelectric receiver to let through an optical signal.

5. Timepiece according to claim 4, **characterised in that** the disc of the display means has a plurality of positions (Pi), in each of which an item of information is located, and the second aperture (157) is a slot located between two positions.

6. Timepiece according to claim 4, **characterised in that** the disc of the display means has a plurality of positions (Pi), in each of which an item of information is located, and said disc has an additional position (P32), in which a second aperture (157) is formed.

7. Timepiece according to claim 4, **characterised in that** the disc of the display means has a plurality of positions (Pi), in each of which a marking is located, and the second aperture is a slot at least partially merged with a marking.
